# EUROPEAN PATENT APPLICATION

(11) **EP 2 199 841 A1**
(43) Date of publication of application: **23.06.2010**
(21) Application number: 08305953.5
(22) Date of filing: 16.12.2008
(51) Int. Cl.: G02B 6/35

(54) **An optical wavelength selective component**

(71) Applicant: Alcatel Lucent, 75008 Paris (FR)
(72) Inventor: Ryf, Roland, Aberdeen, NJ 07747 (US)
(74) Representative: Shamsaei Far, Hassan

(57) **Abstract**

A wavelength selective component for separating wavelength channels of an incident light. The component comprises a dispersion grating adapted for reflecting an input light beam received from a folding mirror and angularly separating spectral components of the incident light and transmitting said separated components back to the folding mirror. The curved mirror further reflects the light received toward a first reflective element which in turn redirects the light received back to the folding mirror where it is again reflected from the folding mirror to a second reflective element for outputting said spectral components of light beam.

## Description

The present invention relates to optical wavelength selective components such as but not limited to an optical switch typically used in fiber network nodes.

### DESCRIPTION OF THE BACKGROUND ART

Wavelength selective operations such as for example wavelength selective switchings are used frequently in optical communications for example in Wavelength Division Multiplexing (WDM), or for example in channel equalization, wavelength blockers, optical programmable filters, dispersion compensators and the like. The existing methods are typically based on separating all the wavelength channels incident into a fiber node by using a discrete multiplexer or the like. The individual wavelength channels are then switched by optical or electronic switches and further recombined and routed to the egress fibers also using discrete multiplexers. These solutions however suffer from disadvantages such as for example their comparatively high cost, large size, power consumption, installation time required and operational complexity. Cost is incurred not only due to the cost of the switching fabric, but also due to the cost of the discrete multiplexers needed (one for each connected fiber) as well as by the interconnection fibers (for example for a 40 channel system, forty fiber jumpers are required for each connected fiber). The large size of the device is in a significant part due to the use of a switching matrix, multiplexers, and fiber panels to connect the switches and the multiplexers together. Power consumption is mainly significant with respect to the switches, in particular if electronic switches are used, nevertheless the multiplexers which require active temperature control also consume a significant level of power. Further the installation of the switching node will require many, typically in the order of hundreds, fibers to be connected thereby requiring significant installation time and in addition such installation may be susceptible to connection errors and to impacts of faulty fiber jumpers.

### SUMMARY OF THE INVENTION

Some embodiments of the invention feature a new structure which allows for building a compact wavelength selective component.

According to some embodiment, the wavelength selective component comprises a dispersion grating configured to receive and disperse an input light beam into a plurality of spectral components of light beams; a plurality of optically reflective elements comprising at least one first optically reflective element configured to receive a spectral component of light beam from said plurality of spectral components of light beams and reflect the spectral component of light beam to a second optically reflective element configured to receive said spectral component of light beam and reflect the same toward an output optical fiber; and a folding mirror, configured to cooperate with said dispersion grating, said first reflective element and said second reflective element in reflecting said spectral component of light beam.

The folding mirror may be adapted for reflecting an input light beam toward the dispersion grating.

The dispersion grating may be configured to reflect spectral components of an incident light in angularly separated beams.

The optically reflective elements may be microelectromechanical elements or a plurality of pixels of a liquid crystal on silicon device in phase amplitude modulation mode.

The folding mirror may be a fixed curved folding mirror or a partially flat folding mirror.

The wavelength selective components may be an optical switch.

Some embodiments of the invention feature a method of separating wavelength channels of an incident light comprising the steps of:
a- directing an input light beam to a dispersion grating;
b- angularly separating spectral components of the incident light on the dispersion gating and transmitting said separated spectral components of light to a folding mirror;
c- reflecting by the folding mirror, at least one spectral component of light received in step b, toward a first optically reflective element;
d- reflecting the spectral component of light received in step c from the first optically reflective element to the folding mirror and from the folding mirror to a second optically reflective element;
e- reflecting by the second optically reflective element, the spectral component of light received in step d to the folding mirror and from the folding mirror to the dispersion grating;
f- outputting the spectral component of light from the dispersion grating to an output fiber.

### BRIEF DESCRIPTION OF THE DRAWINGS

Figure 1 is a schematic representation of a structure of a dispersion grating suitable for use in the wavelength selective component according to embodiments of the invention.
Figure 2 is a schematic representation of an assembly of reflective elements with the dispersion grating of figure 1 included in the assembly.
Figures 3a and 3b are respectively schematic representations of a top view and a side view of a wavelength selective component according to embodiments of the invention.

### EXAMPLES OF PREFERRED EMBODIMENTS

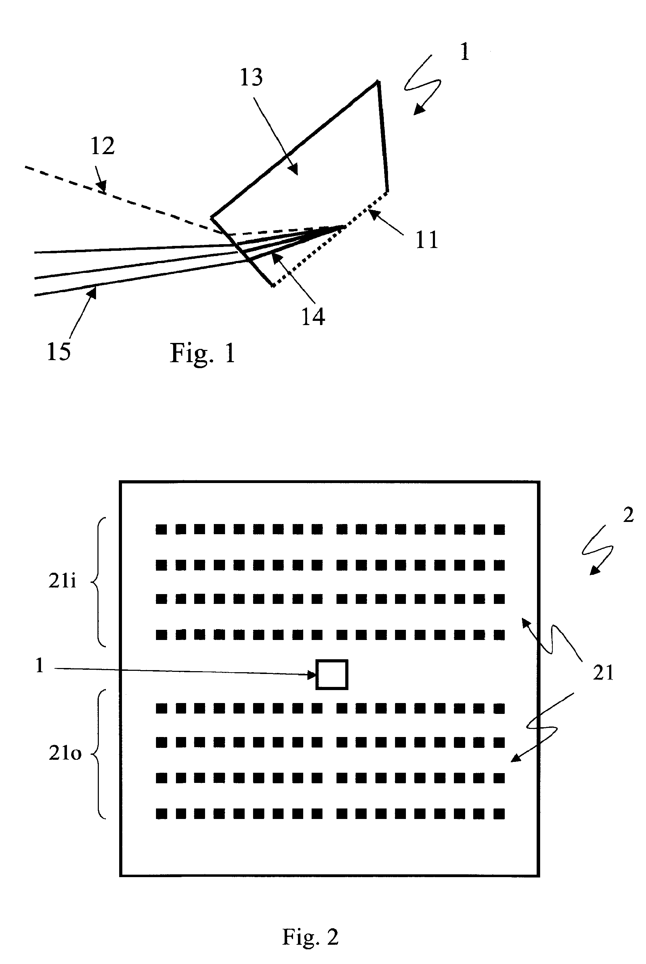

Figure 1 schematically represents a structure of a dispersion grating 1 suitable for use in the wavelength selective component according to embodiments of the invention. The grating 1 is preferably capable of providing a high level of dispersion in relatively small volume. For example the grating 1 comprises a pattern of dispersive lines 11 (hereinafter, dispersive pattern) with a grating period of about 4250 lines per millimeter and is made of a high refractive index optical material, the index being about or more than 3, such as for example Silicon. The grating is a so called immersion grating, were a light beam 12 first enters the high refractive index material 13 and is deflected according to Snell's law. Once the incoming and deflected light reaches the dispersive pattern 11 of the grating 1, it is further diffracted by the effect of the dispersive pattern 11 resulting in a plurality of spectral components of 14 of light. The spectral components of the beam 14 then exist the high refractive index material 13 being again deflected according to Snell's law as shown by reference numeral 15. One example of such highly dispersive grating together with a method of manufacture thereof is described in European patent application number 08305949.3 filed on 16 December, 2008 the content of which is hereby incorporated by reference in its entirety in the present application. This type of grating provides a dispersion level that is considerably (for example 8 times) higher than a conventional dispersion grating, allows to substantially reduce the size of grating-based devices such as switches or demultiplexers, but more importantly the grating makes it more practical to design new optical arrangements for more complex devices. For example a free space demultiplexer which has a typical size of 30mmx20mmx60mm, can be designed in a more reduced size, for example about 15mmx5mmx2mm.

Figure 2 is a schematic representation of an assembly 2 of reflective elements with the dispersion grating 1 of figure 1 included in the assembly 2. The assembly 2 comprises a plurality of reflective elements 21. Preferably the reflective elements are arranged in the form of an array of rows. For example, in case the wavelength selective component is an optical switch, the arrangement of the reflective elements may be comprised of a number K of rows of first reflective elements 21 i (hereinafter referred to as input reflective elements) which are adapted to receive incoming light from K corresponding input fibers (connected to the assembly) and preferably the same number K of second reflective elements 21o (hereinafter referred to as output reflective elements) adapted to redirect the light (after reflections) to output fibers (connected to the assembly). In such case therefore, the assembly 2 comprises 2K rows of reflective elements. In figure 2, K is assumed to be four, thus eight rows of reflective elements 21 are provide in the array. In practice K may change between 3 and 10 for typical network architecture. Every fiber connected can carry N wavelength where N is typically from 32 to 40 for metro regional networks and larger than 40 for long haul networks.

The array of reflective elements 21 may be arranged for example in high fill factor rows, and low fill factor columns (however it is to be noted that figure 2 is not made in scale). For example the reflective elements may have a separation of about 0.1 mm from each other in a row, for a typical width of 0.9mm per reflective element and the rows may be at distance of about 2mm or more from each other.

The array of the input reflective elements 21i may be located as consecutive rows located next to each other, as shown for example at the upper part of the assembly 2 and the array of the output reflective elements 21o may be located as consecutive rows located next to each other, as shown for example an at the lower part of the assembly 2 in figure 2.

In case the reflective elements are made of MEMS micromirrors, they may be arranged to tilt in two directions at an angle of about ±7° tilt in each direction horizontally and about ±4° in each direction vertically.

The wavelength selective component constructed based on the structure of such assembly, allows to connect any wavelength channel of any input fiber to the same wavelength channel of any output fiber, without major restrictions with the exception that each output fiber can only receive a particular wavelength channel from only one input fiber at a time.

The dispersion grating 1 is placed at a convenient position on the assembly 2 in order to be able to perform a dispersive function as is described further below.

The reflective elements 21 may be microelectromechanical systems (MEMS) constructed in the form of micromirrors. Alternatively the reflective elements may be comprised in a liquid crystal on silicon device (LCOS) in phase amplitude modulation mode. In that case multiple pixels of the liquid crystal device would perform the functionality of a single MEMS mirror.

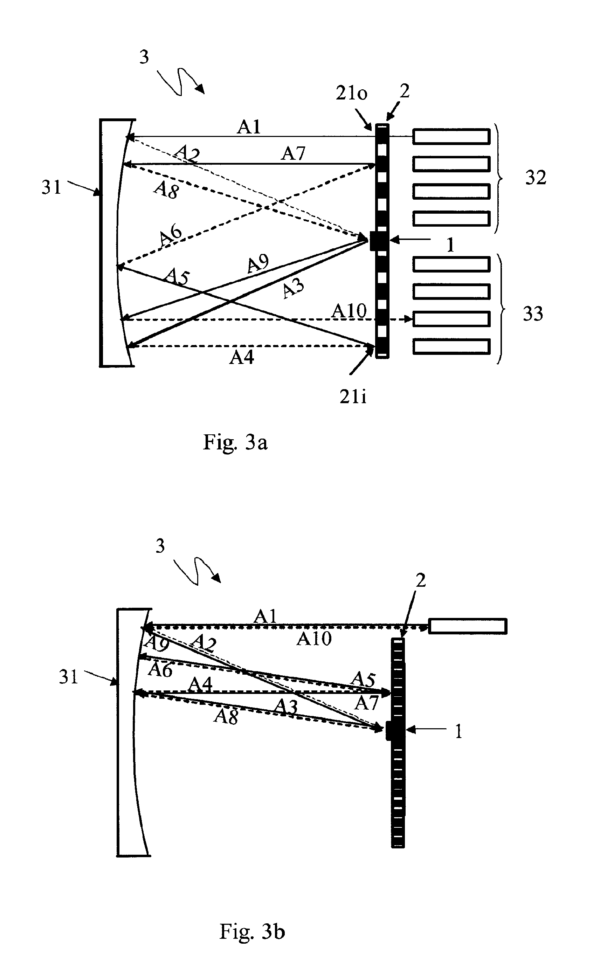

Figure 3a and 3b show respective schematic representations of a top view and a side view of a wavelength selective component 3 according to embodiments of the invention. The wavelength selective device 3 comprises an assembly of reflective elements 2 having a dispersion grating 1 located at a convenient position, for example at the center of the assembly 2, a folding mirror 31, an array of input collimators 32 and an array of output collimators 33.

The optical wavelength selective component of figure 3 may be for example a 4x4 optical switch with 32 wavelength channels spaced at 100GHz channel width. In figure 3a, four input collimators 32 and four output collimators 33 are shown, whereas in figure 3b, only one of the eight collimators 32 and 33 is visible as this figure represents a side view of the component 3. However any convenient number of input and output collimators may be use within the scope of the present invention. Also for the sake of simplicity of understanding the following description, light incident on the folding mirror 31 is shown by means of solid-line arrows and light reflected from the folding mirror 31 is shown by means of broken-line arrows.

According to some embodiments, and with reference to figures 3a and 3b, the wavelength selective component 3 operates in the following manner. The light beam enters the component 3 in one of the fibers of the linear input collimator array 32 and is transmitted from the input collimator 32 to the folding mirror 31 as shown by arrow A1. The incident light is then reflected from the folding mirror 31 as shown by arrow A2 and is incident on the dispersion grating 1 where the spectral components of the incident light are angularly separated and reflected back toward the folding mirror 31 as represented in figures 3a and 3b by arrow A3. It is to be noted that for the sake of simplicity of illustration only one reflection beam, arrow A3, is shown in the figure. However in practice the dispersion grating 1 reflects a spectrum of components of the light beam comprising a plurality of components which are reflected at different angles. The reflected light beam, arrow A3, propagates further and impacts on the folding mirror 31 and is reflected back, arrow A4, from the folding mirror 31, whereafter it reaches an input reflective element 21i (as represented in figure 3a) from the rows of input reflecting elements.

For every input collimator 32 there is provided a row of corresponding input reflective elements 21i such that each input reflective element 21i of the row receives a different wavelength channel corresponding to spectral components of the light input buy a corresponding input collimator 32.

The input reflective element 21 i which receives the beam, then redirects the light, as shown by arrow A5, such that the corresponding spectral component of light is directed to the folding mirror 31 and after impact on the folding mirror 31 is reflected toward a respective output reflective element 21o (as represented in figure 3a) as shown by arrow A6. The incident component of light is once again reflected back to the folding mirror 31 arrow A7, and then reflected from the folding mirror 31 toward the dispersion grating 1 as show by arrow A8. The dispersion grating 1 is adapted to redirect the beam (the spectral component of the light) in such a way that it will couple into a desired output fiber in the output collimator 33. This is done by a first reflection of the beam from the dispersion grating 1 to the folding mirror 31 as show by arrow A9, and a subsequent reflection of the beam from the folding mirror 31 to an output collimator 33 as shown by arrow A10.

It is to be noted that the position and the tilt angle of the input reflective elements 21i as well as the output reflective elements 21 o are predetermined and preferably fixed in such a way that a complete path for the light in traveling from an input collimator 32 to the output collimator 33, including the various reflections between the folding mirror and the reflective elements are well as with the dispersion grating, is ensured. This implies that, other conditions being unchanged, the reflective elements always receive the same spectral complement of the dispersed light and forward the received light toward the same output fiber (adapted to receives the same wavelength in each operation). As already mentioned previously, the grating has a high dispersion capability, thereby being capable of dispersing the received beam in a spectrum of separate wavelengths being deflected at different angels whereas the reduced size of such grating allows for constructing the overall structure of the component with a relatively low volume. Such an optical component may be manufactured as small as 45mmx70mmx90mm.

The curved folding mirror may be a fixed curved folding mirror or alternatively it may be a partially flat folding mirror. The term "folding" in reference to the mirror is meant to refer to a capability to reuse part of the optical system multiple time, thus to "fold the optical system" such that the overall size of the system is reduced. The folding mirror configuration is such that the folding mirror acts mainly as an optical Fourier Transform element. The folding mirror can be a single reflecting curved mirror, a combination of lens and a reflective element.

In case a partially flat folding mirror is used, the horizontal tilt requirement of the MEMS micromirrors may be reduced from ±7° to ±1°, however this may require an increase in the size of the component in length by a factor of about 1.5.

Although the embodiments described herein are preferred, deviations from such embodiments may be possible without departing from the scope of the present invention. Some non-limiting examples are given below.

For example, the input collimators 32 may be arranged to direct the incoming light directly to the dispersion grating 1 without the light being reflected from the folding mirror 31 to the grating. In such case the input collimators may be located at a position which permits a direct impact of the incoming light on the dispersion grating. For example, the input collimators may be placed at the top-left side of the wavelength selective component of figure 3a.

As a further example, the output collimators 33 may be arranged to receive the outgoing component of light directly from the grating without the light being reflected from the folding mirror 31 to the output collimators 33. In such case the output collimators 33 may be located at a position which permits a direct impact of the outgoing light thereupon from the dispersion grating 1. For example, the output collimators 33 may be placed at the top-left side of the wavelength selective component of figure 3a.

In an alternative embodiment a cylindrical lens with the cylinder axes parallel to the low fill factor direction of the reflective elements, can be placed in front of the array of reflective elements 21 in order to reduce the tilt requirements of the reflective elements.

In still another alternative embodiment, the dispersion grating may be placed outside the assembly of the reflective elements.

## Claims

1. A wavelength selective component comprising:
- a dispersion grating configured to receive and disperse an input light beam into a plurality of spectral components of light beams;
- a plurality of optically reflective elements comprising at least one first optically reflective element configured to receive a spectral component of light beam from said plurality of spectral components of light beams and reflect the spectral component of light beam to a second optically reflective element configured to receive said spectral component of light beam and reflect the same toward an output optical fiber;
- and a folding mirror, configured to cooperate with said dispersion grating, said first reflective element and said second reflective element in reflecting said spectral component of light beam.

2. The wavelength selective component of claim 1 wherein the folding mirror is adapted for reflecting an input light beam toward the dispersion grating.

3. The wavelength selective component of claim 1 or claim 2 wherein the dispersion grating is configured to reflect spectral components of an incident light in angularly separated beams.

4. The wavelength selective component of anyone of claims 1 to 3 wherein the optically reflective elements are microelectromechanical elements or a plurality of pixels of a liquid crystal on silicon device in phase amplitude modulation mode.

5. The wavelength selective component of anyone of claims 1 to 4 wherein the folding mirror is a fixed curved folding mirror or a partially flat folding mirror.

6. The wavelength selective component of anyone of the claims 1 to 5 wherein a cylindrical lens with cylinder axes parallel to a low fill factor direction of the reflective elements is placed in front of an array of reflective elements thereby reducing a tilt requirement of the reflective elements.

7. The wavelength selective component of anyone of claims 1 to 6 wherein the dispersion grating is placed outside the assembly of the reflective elements.

8. The wavelength selective component of anyone of claims 1 to 7 wherein the wavelength selective components is an optical switch.

9. A method of separating wavelength channels of an incident light comprising the steps of:
a- directing an input light beam to a dispersion grating;
b- angularly separating spectral components of the incident light on the dispersion gating and transmitting said separated spectral components of light to a folding mirror;
c- reflecting by the folding mirror, at least one spectral component of light received in step b, toward a first optically reflective element;
d- reflecting the spectral component of light received in step c from the first optically reflective element to the folding mirror and from the folding mirror to a second optically reflective element;
e- reflecting by the second optically reflective element, the spectral component of light received in step d to the folding mirror and from the folding mirror to the dispersion grating;
f- outputting the spectral component of light from the dispersion grating to an output fiber.

10. The method of claim 9 wherein the step f comprises the steps of
g- reflecting the spectral component of light received by the dispersion grating to the folding mirror; and
h- outputting the spectral component of light from the folding mirror to the output fiber.
